# EUROPEAN PATENT APPLICATION

(11) **EP 4 505 973 A1**
(43) Date of publication of application: **12.02.2025**
(21) Application number: 23935635.5
(22) Date of filing: 22.08.2023
(51) Int. Cl.: A61C 17/02, F16K 3/28, F16K 31/54

(54) **ASSEMBLED WATER FLOSSER HANDLE WITH WATER STREAM SWITCH**

(30) Priority: 04.05.2023 CN 202310486802
(71) Applicant: Bixdo (SH) Healthcare Technology Co., Ltd., Shanghai 201100 (CN); Guang Dong Bixdo Health Technology Co., Ltd., Foshan, Guangdong 528300 (CN)
(72) Inventor: LIU, Fei, Shanghai 201100 (CN); ZHANG, Xiang, Shanghai 201100 (CN); LI, Yi, Shanghai 201100 (CN)
(74) Representative: IPrime Rentsch Kaelin AG
(86) International application number: PCT/CN2023/114286
(87) International publication number: WO 2024/227325

(57) **Abstract**

An assembled oral irrigator handle with a waterflow switch relates to the field of oral cavity cleaning and nursing, and comprises a handle housing (1), a waterflow switch control mechanism (2), a nozzle mechanism (3) and a water pipe mechanism (4); wherein the water pipe mechanism (4) and the nozzle mechanism (3) are respectively in communication with the waterflow switch control mechanism (2), and the handle housing (1) encloses the above structure to provide protection therefor and to serve as a grip for the user. When the waterflow switch control mechanism (2) is turned on, the water pipe mechanism (4) transmits the pulsed water flow from the oral irrigator main body through the waterflow switch control mechanism (2) to the nozzle mechanism (3) for ejection; when the control valve mechanism is turned off, the transmission between the water pipe mechanism (4) and the nozzle mechanism (3) is cut off.

## Description

### CROSS-REFERENCE TO RELATED APPLICATIONS

The present disclosure claims priority to a Chinese patent application No. 202310486802.7 filed with the CNIPA on May 4, 2023 and entitled "ASSEMBLED ORAL IRRIGATOR HANDLE WITH WATERFLOW SWITCH", which is hereby incorporated by reference in its entirety.

### TECHNICAL FIELD

The present disclosure relates to an assembled oral irrigator handle with a waterflow switch.

### BACKGROUND

Existing desktop oral irrigator handles are still suffering from some deficiencies in their structural design, such as:

A single mechanical control handle for controlling blocking or communicating of waterflow is not capable of completely shutting off the waterflow, is at the risk of water leakage/dripping (pressure difference due to different liquid levels) after the handle has been below the water level in the main body for a long time. In addition, there are also other deficiencies such as structure complexness and unreasonable waterway design. For this reason, the present disclosure came into being.

### SUMMARY

An objective of the present disclosure is to provide an oral irrigator handle capable of conveniently performing blocking and communicating of waterflow and with a fully assembled structure and convenient waterway design. For this reason, the present disclosure provides an assembled oral irrigator handle with a waterflow switch, comprising:
a handle housing, the handle housing comprising a first shell and a second shell, the first shell and the second shell being clamped together, the handle housing having a mounting chamber formed therein, a top mounting port formed at the top thereof, and a bottom mounting port formed at the bottom thereof;
a waterflow switch control mechanism, being assembled in the mounting chamber and at least comprising:
   a valve seat, comprising at least a water intaking chamber and a control chamber, the water intaking chamber being in communication with the control chamber through a communication passage, and the control chamber comprising a valve spool mounting port;
   a control valve spool, being provided in the control chamber via the valve spool mounting port and comprising a force-applying part, the force-applying part being under control of the control valve spool to apply force towards the water intaking chamber;
   a blocking seal, comprising a blocking seal body and a first elastic restoring member, the blocking seal body being provided in the water intaking chamber, restorably blocking the communication passage by means of the first elastic restoring member, comprising a force-bearing part that bears force from the force-applying part through the communication passage, and being moved after being subjected to force from the force-applying part through the force-bearing part to open the communication passage;
a nozzle mechanism, comprising at least a nozzle, a rod body of which penetrating the top mounting port and being in communication with the control chamber;
a water pipe mechanism, the water pipe mechanism being assembled in the mounting chamber and being in communication with the water intaking chamber through the bottom mounting port.

Optionally, the nozzle mechanism further comprises a locking assembly, which comprises a lock part and a second elastic restoring member, and the lock part is assembled in the mounting chamber by means of the second elastic restoring member, is restorably locked onto the rod body of the nozzle, and comprises a pressing part, which extends outside the handle housing for pressing to unlock; the rod body of the nozzle comprises a locking slot matching with the lock part.

Optionally, the lock part comprises a lock part body and a locking side rib, the lock part body has a first lock part perforation for the rod body to penetrate, and the locking side rib is provided on an inner wall of the first lock part perforation and corresponds to the locking slot.

Optionally, the control valve spool comprises:
a valve spool body comprising a curved surface with a gradient circumferential radius, the force-applying part being implemented as the curved surface; and
a control assembly comprising a first arc-shaped toothed segment and a first straight toothed segment, the first arc-shaped toothed segment being provided on the valve spool body and located outside the mounting port, the first straight toothed segment being meshed with the first arc-shaped toothed segment to drive the valve spool body to rotate inside the control chamber, and the curved surface gradually applying force to the force-bearing part due to rotation of the valve spool body.

Optionally, the curved surface is provided with a positioning slot for holding the force-bearing part, and when the force-bearing part is held in the positioning slot, the blocking seal body keeps a state of opening the communicating passage.

Optionally, the force-bearing part is implemented as a force-bearing rod body, which penetrates the communicating passage and is subjected to force from the force-applying part to drive the blocking seal body to open the communicating passage.

Optionally, the communicating passage comprises a perforation and several communication holes; the force-bearing rod body is inserted into the perforation and is subjected to force from the force-applying part; the communication holes are in communication with the control chamber and the water intaking chamber, and are restorably blocked by the blocking seal body by means of the first elastic restoring member.

Optionally, the blocking seal body is provided with a first blocking seal ring near the communication hole, and the first blocking seal ring restorably seals the communication holes along with the blocking seal body by means of the first elastic restoring member.

Optionally, a top of the blocking seal body is capable of blocking the perforation, and/or, the force-bearing rod body and the perforation form a contact seal therebetween.

Optionally, the rod body of the nozzle is in communication with the valve seat through an elastic seal, the elastic seal is provided in the valve seat, the rod body is inserted into the valve seat and locked by the lock part, and the elastic seal applies a rebound force to the rod body when the rod body is ejected after being unlocked.

Optionally, the waterflow switch control mechanism further comprises a mounting branch pipe, which is provided with a mounting bracket therein, one end of the mounting branch pipe is in communication with a water intaking chamber body, the other end of the mounting branch pipe is for communication with the water pipe mechanism; the first elastic restoring member is a spring and is installed between the mounting bracket and the blocking seal body.

Optionally, the water pipe mechanism at least comprises a pipe core and a water pipe; the pipe core is provided with a liquid flow channel therein and is provided at two ends of the pipe core with a pipe core inlet and a pipe core outlet which are in communication with the liquid flow channel, the water pipe is connected to the pipe core inlet, and the pipe core outlet is inserted into the mounting branch pipe.

Optionally, the handle housing is integrally formed; or, the handle housing comprises a first shell and a second shell, and the first shell and the second shell are clamped together to form the handle housing.

Optionally, the pipe core is rotatably installed in the handle housing by means of a clamping assembly; the clamping assembly comprises:
a first clamping port, the first clamping port being provided on an inner wall of the first shell;
a second clamping port, the second clamping port being provided on an inner wall of the second shell and cooperating with the first clamping port to enclose a constraining hole; and
a first annular rotating slot, the first annular rotating slot being arranged around the pipe core, being clamped in the constraining hole, and rotating along a self-axis of the pipe core.

Optionally, the pipe core is detachably inserted into the handle housing by the constraining assembly; the constraining assembly comprises:
a cantilever, the cantilever being provided in the handle housing and provided with a constraining tab;
a constraining projection, the constraining projection being provided on an outer wall of the pipe core and provided with a constraining slot matched with the constraining tab, and the constraining slot rotating to clamp with the constraining tab when the pipe core is inserted into the handle housing.

The above technical solutions alone or in combination show the following beneficial effects:
the blocking seal body blocks the passage between the water intaking chamber and the control chamber by means of the first elastic restoring member, which can completely cut off and block the waterflow. During use, the control valve spool is actuated to apply force to the blocking seal body, so as to jack up the blocking seal body and open the passage, thereby achieving communication between the two chambers, and subsequently achieving the communication between the nozzle and the water pipe mechanism, which are respective in communication with the two chambers, for oral cleaning. The structure is simple and convenient to operate, and may block waterflow without water leakage.

The present structure is a fully assembled structure, and is simple and convenient to assemble and disassemble.
in the blocked state, even if there is a liquid level difference between the oral irrigator main body and the water intaking chamber of the handle, the pressure exerted by the liquid in the water intaking chamber on the blocking seal body may desirably seal the communication channel, thereby creating a positive effect; therefore, there is no risk of leakage or dripping after the handle is below the water level of the main body for a long period of time;
the force-applying part of the valve spool body is a curved surface with a gradient circumferential radius, and when the valve spool body is rotated, the curved surface close to the force-bearing part gradually increases in its circumferential radius and gradually presses on the blocking seal body, such that the blocking seal body opens the communication passage; this process is smooth and convenient;
a positioning slot is provided where the curved surface presses against the force-bearing part to open the communication passage, such that the force-bearing part may be held in the positioning slot through elastic support of the first elastic restoring member; by keeping the opened state of the communication passage, it is possible to facilitate the continuous flow of waterflow, which in turn makes it convenient for the user to continuously perform oral cleansing operations;
the control assembly achieves pure mechanical transmission through direct meshing of the toothed segments, eliminating the need for electrified structural settings on the handle, and facilitating cost-effectiveness and an intuitive and effective control;
the water pipe mechanism is installed by means of the clamping assembly, and may rotate relative to the handle housing, facilitating the adjustment of the direction of the nozzle on the handle for ease of use by the user;
the water pipe mechanism is installed by means of the constraining assembly; during assembly, the pipe core of the water pipe mechanism is inserted and rotated, accompanied by an audible "clicking" feedback sound, indicating that the pipe core is clamped to the handle housing by means of the constraining assembly; during disassembly, it may be simply retracted and pulled out in the opposite direction, which is convenient and fast.

### BRIEF DESCRIPTION OF THE DRAWINGS

FIG. 1 shows a schematic diagram of the structure disclosed herein.
FIG. 2 shows an exploded view of the structure disclosed herein.
FIG. 3 shows a fully exploded view of the structure disclosed herein.
FIG. 4 shows an exploded view of the structure of a waterflow switch control mechanism in the present disclosure.
FIG. 5 shows a front view of the structure of the waterflow switch control mechanism in the present disclosure.
FIG. 6 shows a cross-sectional view at section A-A in FIG. 5.
FIG. 7 shows a relationship diagram of the structure between a blocking seal body and a control valve spool in the waterflow switch control mechanism in the present disclosure.
FIG. 8 shows a relationship diagram of the structure of the control assembly in the present disclosure.
FIG. 9 shows a schematic diagram of the structure of a mounting branch pipe in the present disclosure.
FIG. 10 shows a side view of the structure after the water pipe is removed in the present disclosure.
FIG. 11 shows a state diagram of a waterflow blocking structure shown in a sectional view at B-B in FIG. 10.
FIG. 12 shows a stereo view of FIG. 11.
FIG. 13 shows an enlarged view of a portion of FIG. 12.
FIG. 14 shows a state diagram of a waterflow communication structure in a sectional view at B-B in FIG. 10.
FIG. 15 shows an enlarged view of a portion of FIG. 14.
FIG. 16 shows a schematic diagram of the structure in which a nozzle is mounted on a valve seat by a locking assembly in the present disclosure.
FIG. 17 shows a schematic diagram of the structure of the locking assembly from a perspective in the present disclosure.
FIG. 18 shows a schematic diagram of the structure of the locking assembly from another perspective in the present disclosure.
FIG. 19 shows a schematic diagram of the structure in which the pipe core is installed in the handle housing by a clamping assembly in the present disclosure.
FIG. 20 shows a schematic diagram of the structure in which the pipe core is installed in the handle housing by a constraining assembly in the present disclosure.
FIG. 21 shows an assembly diagram of the structure in which the pipe core is installed in the handle housing by the constraining assembly in the present disclosure.
FIG. 22 shows an appearance diagram of the structure in which the pipe core is installed in the handle housing by the constraining assembly in the present disclosure.
FIG. 23 shows a schematic diagram in which a constraining projection and a cantilever are not clamped in a sectional view at C-C in FIG. 22.
FIG. 24 shows a schematic diagram in which a constraining projection and a cantilever are clamped in a sectional view at C-C in FIG. 22.

Wherein: handle housing 1; first shell 11; second shell 12; top mounting port 13; bottom mounting port 14; waterflow switch control mechanism 2; valve seat 21; water intaking chamber 211; control chamber 212; valve spool mounting port 2121; water discharging chamber 213; perforation 2141; communication hole 2142; control valve spool 22; valve spool body 221; force-applying part 2211; positioning slot 2212; first spindle seal ring 2213; first spindle seal slot 2214; second spindle seal ring 2215; second spindle seal slot 2216; mounting terminal plate 2217; control assembly 222; first arc-shaped toothed segment 2221; first straight toothed segment 2222; pushing button 2223; shell mounting port 2224; blocking seal 23; blocking seal body 231; force-bearing part 2311; first blocking seal ring 2312; first elastic restoring member 232; mounting branch pipe 24; mounting bracket 241; nozzle mechanism 3; nozzle 31; rod body 311; annular locking slot 312; locking assembly 32; lock part 321; lock part body 3211; first lock part perforation 32111; locking side rib 3212; second elastic restoring member 322; pressing part 323; guiding part 324; elastic seal 33; water pipe mechanism 4; pipe core 41; pipe core clamping projection 411; first pipe core sealing slot 412; first pipe core sealing ring 413; second pipe core sealing slot 414; connecting hard pipe 415; conical part 416; water pipe 42; first clamping plate 431; first clamping port 4311; second clamping plate 432; second clamping port 4321; constraining annular rebar 433; first annular rotating slot 434; first annular rebar 435; cantilever 441; constraining tab 4411; constraining projection 442; constraining slot 4421; guiding slot 443; constraining plate 444; stopper 445; fitting curved surface 4451; protection bottom shell 46; bottom shell clamping hole 461.

### DETAILED DESCRIPTION

The preferred embodiment described below is merely exemplary, and those skilled in the art may conceive of other obvious variations. The basic principles defined in the following description of the present disclosure may be applied to other implementations, variations, improvements, equivalents, and other technical solutions that do not deviate from the spirit and scope of the present disclosure.

Those skilled in the art should understand that in the disclosure of this invention, orientation or position relationships referred by terms such as "longitudinal", "transverse", "up", "down", "front", "back", "left", "right", "vertical", "horizontal", "top", "bottom", "inner", and "outer", are based on the orientation or position as shown in the accompanying drawings, are used solely for the purpose of description and to simplify the description of the present disclosure, and are not intended to indicate or imply that The device or element referred to must have a specific orientation, be constructed and operate in a specific orientation. Therefore, these terms should not be interpreted as limiting the scope of the present disclosure.

In the present embodiment, "circumferential radius" is defined as a distance from any point on the curved surface to the rotation axis of the valve spool body 231, and is used to describe a gradually expanding structural form of the curved surface, so as to realize the gradual pressing on the blocking seal body 231; the "depth direction" is defined as the insertion direction of the nozzle 31 into the water discharging pipe 42 of the oral irrigator; the "self-axis" is defined as the axis along the length direction of the rod body 311 of the nozzle 31, which serves as the reference for the rotating axis.

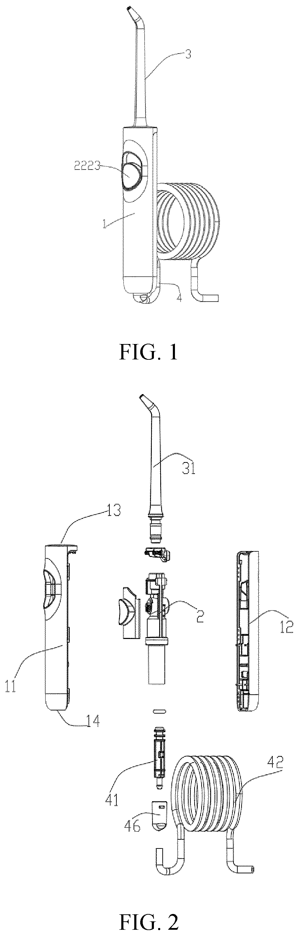

Please refer to FIGS. 1, 2, 3 and 4, the present embodiment provides an assembled oral irrigator handle with a waterflow switch, comprising a handle housing 1, a waterflow switch control mechanism 2, a nozzle mechanism 3, and a water pipe mechanism 4; wherein, the water pipe mechanism 4 and the nozzle mechanism 3 are respectively in communication with the waterflow switch control mechanism 2, and the handle housing 1 encloses the above structure to provide protection and to serve as a grip for the user. When the waterflow switch control mechanism 2 is turned on, the water pipe mechanism 4 transmits the pulsed water flow from the oral irrigator main body through the waterflow switch control mechanism 2 to the nozzle mechanism 3 for ejection; when the control valve mechanism is turned off, the transmission between the water pipe mechanism 4 and the nozzle mechanism 3 is cut off, and it is not affected by leakage caused by the pressure difference between the residual water in the water pipe mechanism 4 and the water level of the oral irrigator main body.

Specifically, the handle housing 1 has a mounting chamber inside, with a top mounting port 13 at the top and a bottom mounting port 14 at the bottom. In the present embodiment, the handle housing 1 comprises a first shell 11 and a second shell 12, which are fixed after being clipped together by a clip, which is a conventional design for the oral irrigator handle and will not be elaborated herein.

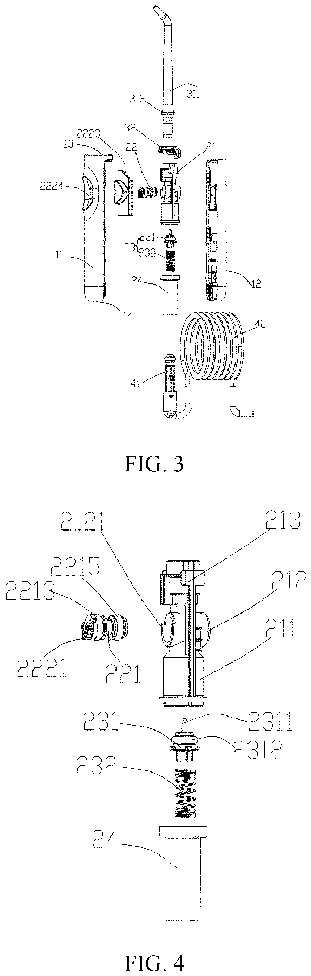

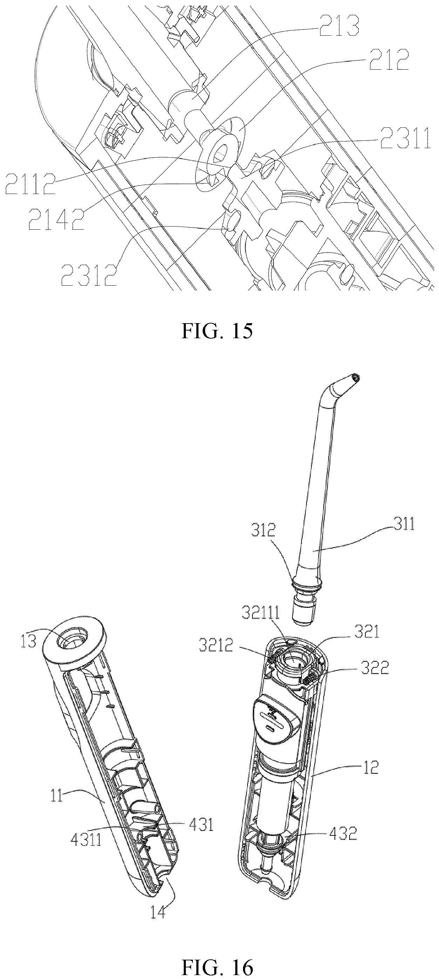

Please refer to FIG. 3 in conjunction with FIGS. 4 to 7, the waterflow switch control mechanism 2 is assembled in the mounting chamber, and at least comprises at least a valve seat 21, a control valve spool 22, and a blocking seal 23. Wherein, the valve seat 21 is provided therein with at least a water intaking chamber 211 and a control chamber 212. The water intaking chamber 211 is in communication with the control chamber 212 through a communication passage, and the control chamber 212 is provided with a valve spool valve spool mounting port 2121. The control valve spool 22 is provided in the control chamber 212 through the valve spool mounting port 2121, and is provided with a force-applying part 2211 which is under control of the control valve spool 22 to apply force towards the water intaking chamber 211. The blocking seal 23 comprises a blocking seal body 231 and a first elastic restoring member 232. The blocking seal body 231 is provided in the water intaking chamber 211, restorably blocks the communication passage through the first elastic restoring member 232, is provided with a force-bearing part 2311 that is subjected to force from the force-applying part 2211 through the communication passage, and is moved to open the communication passage after the force-bearing part 2311 is subjected to force from the force-applying part 2211. That is, the status shown in FIG. 15.

The nozzle mechanism 3 and the water pipe mechanism 4 serve as the oral cleaning member and the water inlet member, respectively, and the communication therebetween is controlled by the waterflow switch control mechanism 2. Wherein, the nozzle mechanism 3 is in communication with the control chamber 212 through the top mounting port 13, and the water pipe mechanism 4 is in communication with the water intaking chamber 211 and the oral irrigator main body through the bottom mounting port 14.

Please refer to FIGS. 16, 17, and 18, the nozzle mechanism 3 is assembled onto the valve seat 21 through the top mounting port 13, and comprises at least the nozzle 31, the rod body 311 of which penetrates the top mounting port 13 and is in communication with the control chamber 212. In the present embodiment, the valve seat 21 of the waterflow switch control mechanism 2 serves as a core component, with its top installed with the nozzle 31 and its bottom installed with the water pipe mechanism 4, making the overall structure linear and facilitating the design and communication of the waterway. Additionally, in the present embodiment, the blocking seal body 231 blocks the passage between the water intaking chamber 211 and the control chamber 212 through the first elastic restoring member 232, which can completely cut off and block the waterflow. During use, the control valve spool 22 is actuated to apply force to the blocking seal body 231, so as to jack up the blocking seal body 231 and open the passage, thereby achieving communication between the two chambers, and subsequently achieving the communication between the nozzle 31 and the water pipe mechanism 4, which are respective in communication with the two chambers, for oral cleaning. The structure is simple and convenient to operate, and may block waterflow without water leakage.

The above technical solution is basically essential to realize the present embodiment, which is described in further detail below in conjunction with the accompanying drawings and specific embodiments:
Referring to FIGS. 1 and 2 in conjunction with FIG. 4, the nozzle 31 is in communication with the control chamber 212 through the top mounting port 13, which can be done in a direct or indirect manner. In the direct manner, the control chamber 212 has a mounting port for the nozzle 31, and the nozzle 31 may be directly installed into the mounting port. As a preferred implementation of the present embodiment, the valve seat 21 in the present embodiment further comprises a water discharging chamber 213, which is in direct communication with the control chamber 212 and is installed with the nozzle 31 as an indirect extension of the control chamber 212.

Further, the nozzle mechanism 3 also comprises a locking assembly 32. Wherein, the rod body 311 of the nozzle 31 is inserted into and in communication with the control chamber 212, and is provided with a locking slot 312. The locking assembly 32 comprises a lock part 321 and a second elastic restoring member 322. The lock part 321 is assembled in the mounting chamber by means of the second elastic restoring member 322 and may be resettable locked into the locking slot 312. The lock part 321 comprises a pressing part 323, which extends beyond the handle housing 1 for pressing to unlock. The nozzle mechanism 3 will be described in detail in conjunction with the valve seat structure later.

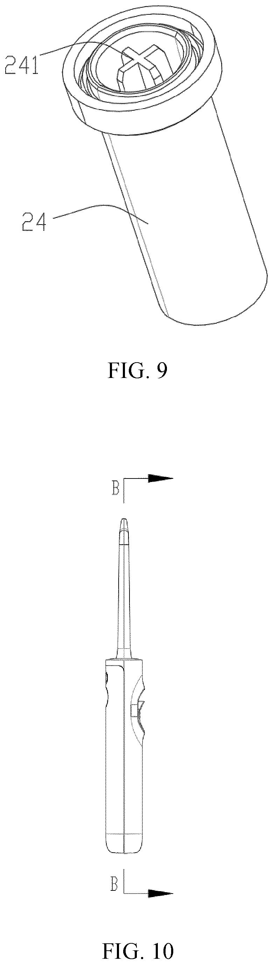

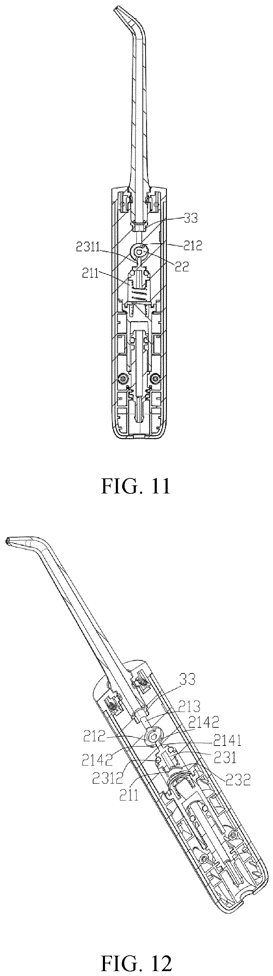

Please refer to FIG. 2 in conjunction with FIGS. 10 to 13, in order to facilitate the rod body 311 of the nozzle 31 to be pulled out of the water discharging chamber 213, in a preferred embodiment of the present embodiment, the water discharging chamber 213 is provided with an elastic seal 33 therein, which is provided with a seal through-hole for water flow to pass through, and the top of the elastic seal 33 forms an elastic portion at the contact with the rod body 311. When the rod body 311 is inserted into the water discharging chamber 213 of the valve seat 21 and locked by the lock part 321, the elastic seal 33 applies a spring force to the rod body 311 that is directed to pop out the rod body 311 after unlocking, that is, the elastic portion has an elastic potential energy after the elastic portion is deformed by the pressure. When the rod body 311 is unlocked, the elastic potential energy is converted into kinetic energy of the rod body 311 to eject the rod body 311 after the locking assembly 32 is relieved of the force against the rod body 311 in the depth direction, which facilitates the removal of the nozzle 31. Preferably, the elastic seal 33 is made of a plastic resin, and the elastic portion is made of plastic resin, and the deformation of the plastic resin generates the elastic potential energy. The structure of the elastic seal 33 and the elastic portion are not limited herein, so long as they have a sealing body and sealing holes in communication with the rod body 311 in a sealed way, and to be able to generate an elastic deformation where they are pressed against the rod body 311.

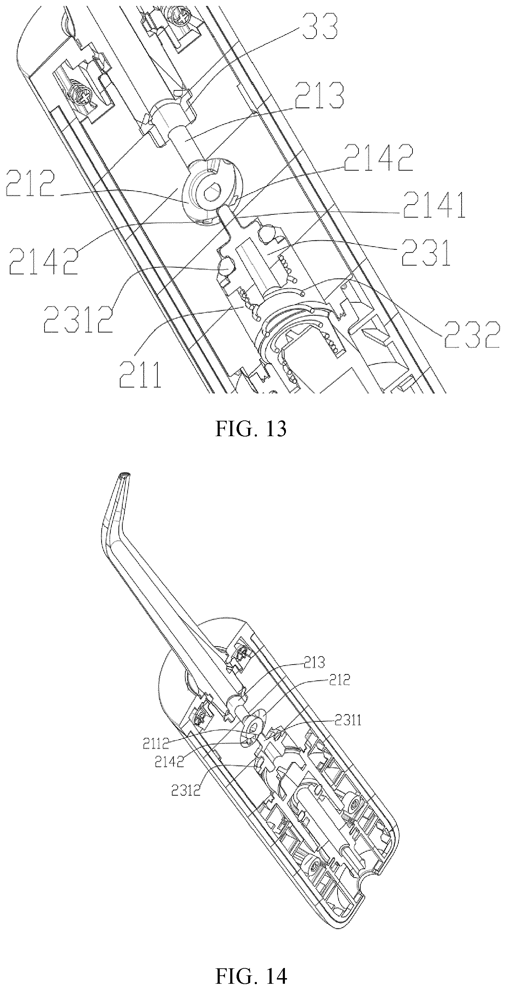

Please refer to FIG. 4, the control valve spool 22, serving as a core control component, comprises a valve spool body 221 and a control assembly 222. The valve spool body 221 applies force to the blocking seal body 231 by rotating, so as to drive the blocking seal body 231 to open the communication passage (that is, the state shown in FIG. 15). This force is canceled after the valve spool body 221 rotates back, and the blocking seal body 231 is restored under the action of the first elastic restoring member 232 and re-blocks the communication passage (that is, the state shown in FIG. 13). The control assembly 222 facilitates the mechanical control of the rotation of the body of the control valve spool 22 by the user.

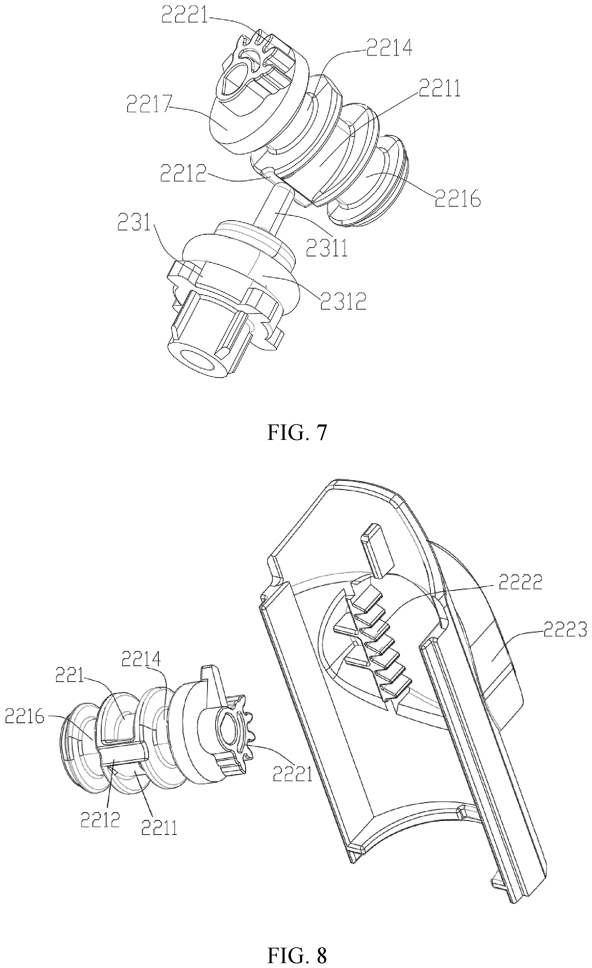

Specifically, please refer to FIGS. 7-8 in conjunction with FIGS. 2-3, the valve spool body 221 is provided with a curved surface with a gradient circumferential radius, and the force-applying part 2211 is implemented as the curved surface. The control assembly 222 comprises a first arc-shaped toothed segment 2221 and a first straight toothed segment 2222. The first arc-shaped toothed segment 2221 is provided on the valve spool body 221 and is located outside the valve spool mounting port 2121, and the first straight toothed segment 2222 is meshed with the first arc-shaped toothed segment 2221 to drive the valve spool body 221 to rotate inside the control chamber 212. As a result, the curved surface gradually applies force to the force-bearing part 2311 due to rotation of the valve spool body 221.

For ease of operation by the user, a shell mounting port 2224 is also provided on the handle housing. The first straight toothed segment 2222 is provided on a pushing button 2223, which is located inside the shell mounting port 2224. Specifically, the position of the shell mounting port 2224 corresponds to the valve spool. The user achieves the meshing drive between the first arc-shaped toothed segment 2221 and the first straight toothed segment 2222 by means of the pushing button 2223.

Further, please refer to FIGS. 7-8, the shape of the valve spool body 221 is not uniquely defined in the present embodiment. As a preferred implementation of the present embodiment, the control chamber 212 on the valve seat 21 is a through-hole. The control chamber 212 is defined as a cavity of the through-hole where the spindle being the valve spool body 221 is inserted. The two ends of the spindle are respectively provided with a first spindle seal slot 2214 and a second spindle seal slot 2216. The first spindle seal slot 2214 is provided with a first spindle seal ring 2213 therein, and the second spindle seal slot 2216 is provided with a second spindle seal ring 2215 therein, so as to seal the two ends of the through-hole, such that the spindle does not cause leakage when rotating, while a space is formed between the spindle and the inside of the through-hole for waterflow to pass through. The spindle also has a curved surface structure with an increasing circumferential radius. As mentioned above, the circumferential radius is interpreted as the distance from any curved surface on the curved surface structure to the rotation axis of the spindle. As the spindle rotates, the curved surface of the spindle gradually approaches the force-bearing part 2311 until it contacts and applies force to it, thereby pressing the force-bearing part 2311 to drive the blocking seal body 231 to open the communication passage. Preferably, the spindle structure may be implemented as a whistle shape, and the curved surface is implemented as the outer surface of the spindle.

Furthermore, the first arc-shaped toothed segment 2221 is provided at one end of the spindle via a mounting terminal plate 2217 and works in conjunction with the first straight toothed segment 2222 to complete the self-rotation driving of the spindle.

Please refer to FIGS. 7-8, due to the gradually applied force from the curved surface, under the elastic reaction force of the first elastic restoring member 232, the user has to keep the state of pressing the curved surface against the force-bearing part 2311, which has been capable of completing the control on the valve spool in the present embodiment. However, to further provide convenience for the user, as a preferred implementation of the present embodiment, a positioning slot 2212 is provided on the curved surface to hold the force-bearing part 2311. When the force-bearing part 2311 is held in the positioning slot 2212, the blocking seal body 231 keeps the state of opening the communication passage. Specifically, when the spindle rotates to open the blocking seal body 231, the first elastic restoring member 232 is subjected to force and deforms until the positioning slot 2212 of the spindle holds the force-bearing part 2311. At this point, the force-bearing part 2311 may keep the state of opening the communication passage without the need for external force, and blocking the communication passage is simply a matter of rotating the spindle to disengage the force-bearing part 2311 from the positioning slot 2212.

In the present embodiment, the force-bearing part 2311 is not limited to a specific shape: its purpose is to move under force from the force-applying part 2211, and thus it is not specifically limited in shape. As a preferred implementation of the present embodiment, the force-bearing part 2311 is implemented as a force-bearing rod body, which penetrates the communication passage and is subjected to force from the force-applying part 2211 to drive the blocking seal body 231 to open the communication passage.

The communication passage, serving as a channel connecting the water intaking chamber 211 and the control chamber 212, is presented in two forms in the present embodiment:
The first form: the communication passage is a single through-hole, the diameter of which is greater than the rod diameter of the force-bearing rod body, such that the force-bearing rod body, even when being inserted into the communication passage, is subjected to a force from the force-applying part 2211 to move downward, it does not hinder the transmission of the waterflow. At this point, in the blocking state, the top of the blocking seal body 231 seals the communication passage; in the communicating state, the blocking seal body 231 opens the communication passage, and although the force-bearing rod body is inserted into the communication passage, it does not hinder the transmission of the waterflow.

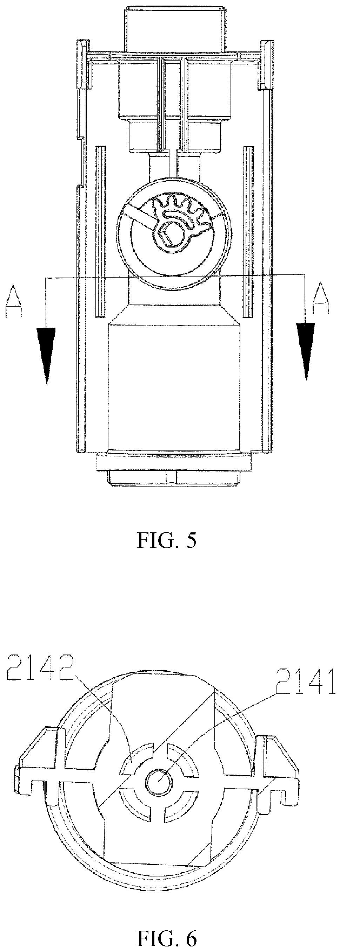

The second form: please refer to FIGS. 5 to 7, the communication passage comprises a perforation 2141 and several communication holes 2142. The force-bearing rod body is inserted into the perforation 2141 and is subjected to force from the force-applying part 2211. The communication hole 2142 is in communication with the control chamber 212 and the water intaking chamber 211, and is restorably blocked by the blocking seal body 231 by means of the first elastic restoring member 232. Furthermore, the blocking seal body 231 is provided with a first blocking seal 23 ring 232 near the communication hole 2142, and the first blocking seal 23 ring 232 may restorably seal the communication passage along with the blocking seal body 231 by means of the first elastic restoring member 232.

The force-bearing rod body penetrates the perforation 2141 into the control chamber 212 and contacts the control valve spool 22, and in order to achieve the effect of blocking the waterflow with the perforation 2141, the top of the blocking seal body 231 may block the perforation 2141, or a contact seal (i.e., no gap between the two) may be formed between the force-bearing rod body and the perforation 2141. Furthermore, to achieve the best sealing effect, the top of the blocking seal body 231 may seal the perforation 2141, and the contact seal may be formed between the force-bearing rod body and the perforation 2141.

Please refer to FIGS. 4 and 9, the first elastic restoring member 232, serving as a structural member capable of restoring the blocking seal body 231, may be installed at the bottom onto the inner wall of the water intaking chamber 211. However, to enhance the stability of the first elastic restoring member 232, as a preferred implementation of the present embodiment, the control valve mechanism further comprises a mounting branch pipe 24, which is provided with a mounting bracket 241 therein. One end of the mounting branch pipe 24 is in communication with the water intaking chamber, and its other end is for communication with the water pipe mechanism 4. The first elastic restoring member 232 is provided between the mounting bracket 241 and the blocking seal body 231.

Furthermore, the first elastic restoring member 232 is a spring and is installed between the mounting bracket 241 and the blocking seal body 231. Preferably, the mounting bracket 241 is a cross-shaped bracket provided inside the mounting branch pipe 24, which may provide installation support while further facilitating the passage of the waterflow.

Please refer to FIGS. 16 to 18, the nozzle 31 and the valve seat 21 form a connection which may be assembled via the top mounting port 13. Additionally, the nozzle 31 is disassembled by the locking assembly 32, the handle housing 1, and the valve seat 21.

Specifically, the rod body 311 of the nozzle 31 is rotatably inserted and in communication with the valve seat 21 of the oral irrigator, and the locking slot is implemented as an annular locking slot 312 on the side of the rod body 311. The second elastic restoring member 322 is located between the lock part 321 and the inner wall of the handle housing 1, and the lock part 321 is restorably locked in the annular locking slot 312 to restrict the rod body 311 from being pulled out of the valve seat 21. The lock part 321 has a pressing part 323, which extends beyond the housing for pressing. The lock part 321 is unlocked from/locked into the annular locking slot 312 by pressing the second elastic restoring member 322 to deform/reset. When the rod body 311 of the nozzle 31 is inserted into the valve seat 21 and the lock part 321 is locked into the annular locking slot 312, due to the annular structure of the annular locking slot 312, the lock part 321 may be rotated relatively to the annular locking slot 312 in the circumferential direction, which restricts the up and down movement of the annular locking slot 312. Therefore, although the nozzle 31 is restricted from being pulled out, it may adjust its direction by rotating around the self-axis. When the pressing part 323 is pressed to move the lock part 321 out of the annular locking slot 312, the nozzle 31 may be pulled out, and may be locked again after the second elastic restoring member 322 resets.

The rod body 311 of the nozzle 31 is provided with a seal ring at the bottom, and the rod body 311 is inserted into the valve seat 21 (specifically, the above water discharging chamber 213), which means that although the rod body 311 is inserted into the valve seat 21, it can rotate freely around the self-axis. In the present embodiment, the lock part 321 is restricted in the depth direction by the handle housing 1 and the valve seat 21 and can only move in the unlocking direction (or the deformation reset direction of the second elastic restoring member 322), thus achieving the locking purpose, which, however, should not be considered the only implementation method of the present embodiment. Without considering cost-effectiveness, a guide rail structure may also be provided on the inner wall of the handle housing 1 to guide the lock part 321 and restrict its movement in the depth direction.

Please refer to FIGS. 16-17, the lock part 321 matches with the annular locking slot 312. When the annular locking slot 312 is rotated with the nozzle 31, although the lock part 321 and the annular locking slot 312 are restricted in the depth direction, they can rotate relative to each other in the self-axis direction. To improve the stability of this structural form, the lock part 321 comprises a lock part body 3211 and a locking side rib 3212. The lock part body 3211 has a first lock part perforation 32111 for the rod body 311 to pass through, and the locking side rib 3212 is provided on the inner wall of the first lock part perforation 32111 and corresponds to the annular locking slot 312. After the nozzle 31 penetrates the first lock part perforation 32111 and is inserted into the valve seat 21 to press against the elastic seal 33 in the water discharging chamber 213, the position of the locking side rib 3212 corresponds to that of the annular locking slot 312 and is locked in the annular locking slot 312, achieving the locking of the nozzle 31 in the depth direction. By pressing, the lock part 321 is displaced, and after the locking side rib 3212 leaves the annular locking slot 312, the nozzle 31 is unlocked in the depth direction, and the nozzle 31 is bounced by the elastic portion of the elastic sealing member, which facilitates removal.

Furthermore, the locking side rib 3212 is locked on the side of the annular locking slot 312. It should be noted that the locking side rib 3212 is a preferred implementation, and other equivalent structures, such as locking protrusions, etc., may also perform equivalent functions and should also be protected in the present solution.

In order to facilitate the pressing of the pressing part 323 and the use of the operator, a first assembly port is provided on the handle housing 1, with the pressing part 323 extending inside the first assembly port for pressing. The first assembly port is provided on the second shell 12 and is not illustrated in the figure, but those skilled in the art should be able to understand it. Furthermore, the pressing direction of the lock part 321 is perpendicular to the insertion direction of the nozzle 31, which may provide a better user experience.

In order to improve the moving stability of the lock part 32, the number of the second elastic restoring members 322 is two, and the two second elastic restoring members 322 are located on both sides of the lock part 321, allowing the lock part 321 to be uniformly forced during the reset process.

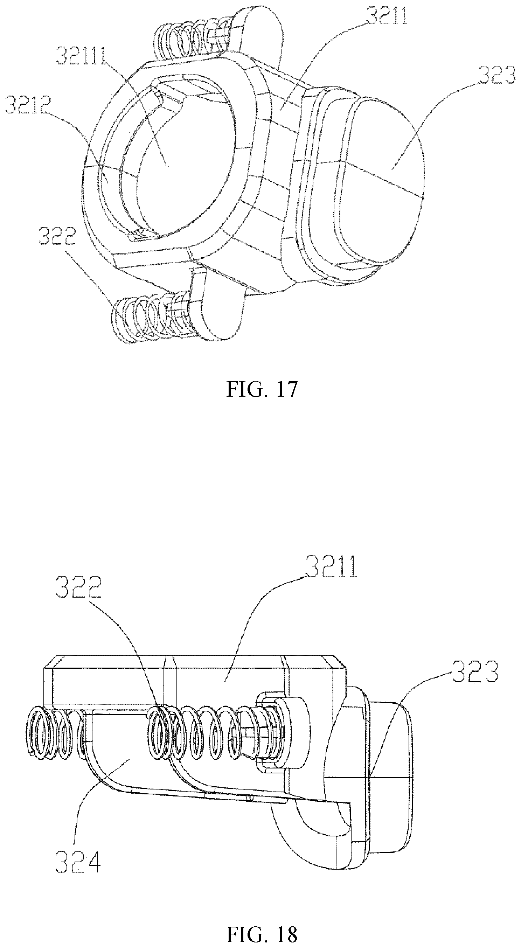

Furthermore, please refer to FIGS. 16 and 18, in order to improve the moving stability of the lock part 32, the lock part 321 also comprises two guiding parts 324. The lock part body 3211 is located above the valve seat 21, and the two guiding parts 324 are located on the lock part body 3211 and on both sides of the valve seat 21. Preferably, the guiding parts 324 are guiding plates, and the two guiding plates clamp the valve seat 21 to guide the unlocking and locking of the lock part 321.

The present embodiment resets the lock part 321 by the second elastic restoring member 322. Preferably, the second elastic restoring member 322 is a spring, and if there are other elastic restoring members that can achieve the same effect as the spring, they also belong to the protection scope of the present disclosure. Regarding the installation form of the second elastic restoring member 322, the present embodiment provides two implementation methods as follows:
1. The second elastic restoring member 322 and the locking side rib 3212 are located on the same side of the annular locking slot 312, and the unlocking/locking of the locking side rib 3212 on the annular locking slot 312 is achieved by compressing/resetting of the second elastic restoring member 322. This implementation is specifically described in the drawings, with the essence of the second elastic restoring member 322 being to store elastic potential energy by pressing, to provide the kinetic energy required for the resetting of the lock part 321, and to be compressed to generate elastic potential energy when it is on the same side as the lock part 321.
2. The second elastic restoring member 322 and the locking side rib 3212 are located on opposite sides of the annular locking slot 312, and the second elastic restoring member 322 is connected between the locking member and the inner wall of the handle housing 1, achieving the unlocking/locking of the locking side rib 3212 from/in the annular locking slot 312 by stretching/resetting of the second elastic restoring member 322. The essence of the second elastic restoring member 322 is to store elastic potential energy by pressing, provide the kinetic energy required for the resetting of the lock part 321, and be stretched to generate elastic potential energy when it is on the opposite side to the lock part 321. In this implementation, the second elastic restoring member 322, as described above, may be replaced by an elastic restoring member such as a rubber band or an elastic rubber tube which is stretched to generate elastic potential energy.

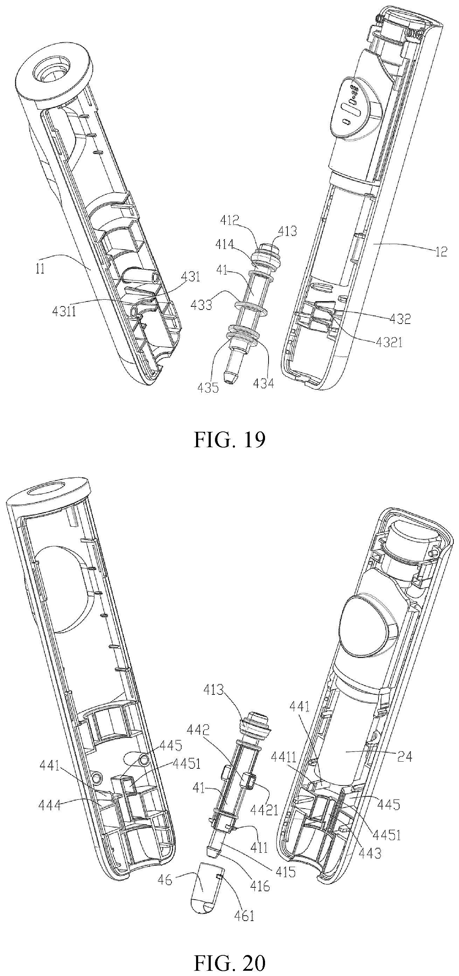

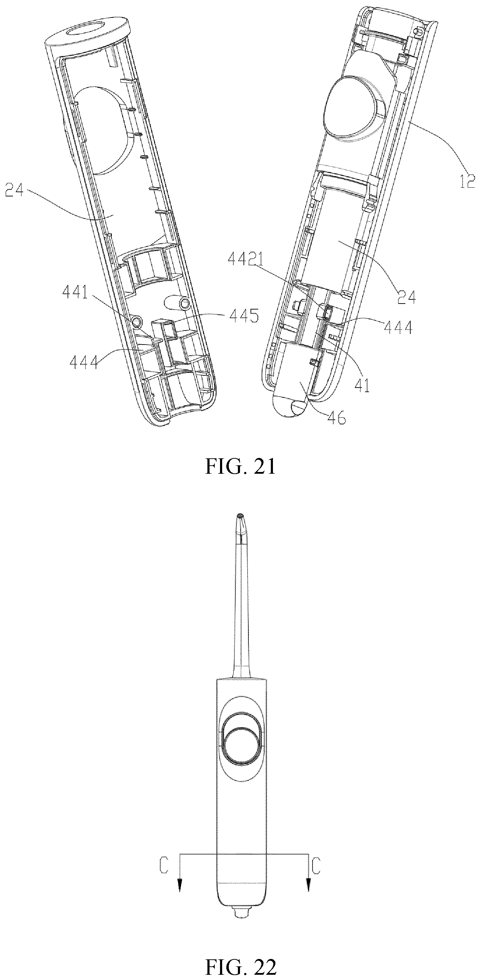

Please refer to FIGS. 19 to 21 in conjunction with FIG. 3, the water pipe mechanism 4 comprises a pipe core 41 and a water pipe 42. The pipe core 41 comprises a fluid channel with a water outlet and a water inlet provided therein, and is directly or indirectly inserted into and in communication with the water intaking chamber 211 of the valve seat 21. Specifically, when matching with the mounting branch pipe 24, the mounting branch pipe 24 is connected to the water intaking chamber 211 of the valve seat 21 in ultrasonically sealed way, and the pipe core 41 is inserted into the mounting branch pipe 24 through the bottom mounting port 14. The bottom of the pipe core 41 is provided with a connecting hard pipe 415, and the water pipe 42 is sleeved onto the connecting hard pipe 415. When there is no need to match with the mounting branch pipe 24, it may be directly inserted into the water intaking chamber 211.

It should be noted, please refer to FIG. 19, whether it is inserted into the water intaking chamber 211 or into the mounting branch pipe 24, the pipe core 41 is provided with a first pipe core sealing slot 412 near the water outlet, where there is a first pipe core sealing ring 413 for sealing purposes. Furthermore, the pipe core 41 is further provided with a second pipe core sealing slot 414 near the water outlet, where there is a second pipe core sealing ring.

Additionally, the connecting hard pipe 415 is further provided with a conical part 416 that facilitates sleeving.

The water pipe 42 is sleeved on the pipe core 41, and is restrained and clamped on the bottom mounting port 14 to complete the stable installation. Furthermore, in the present embodiment, a protection bottom shell 46 is further provided to protect the socket joint between the water pipe 42 and the pipe core 41. Specifically, the top of the protection bottom shell 46 is provided with a sleeving port. When the water pipe 42 is sleeved on the connecting hard pipe 415, the sleeving port of the protection bottom shell 46 is protected and sleeved onto the pipe core 41. At this time, the bottom mounting port 14 is implemented as a bottom opening of the protection bottom shell 46 for the water pipe 42 to pass through.

Further, the protection bottom shell 46 is further provided with a bottom shell clamping hole 461, and the bottom of the pipe core 41 is provided with a pipe core clamping projection 411. After the protection bottom shell 46 is sleeved onto the pipe core 41, the bottom shell clamping hole 461 and the pipe core clamping projection 411 are clamped and fixed, and the pipe core 41 is directly pulled out during disassembly.

In the present embodiment, the handle housing may be integrally formed, or spliced as shown in the present embodiment. Specifically, the handle housing comprises a first shell 11 and a second shell 12. The first shell 11 and the second shell 12 are clamped together to form the handle housing 1.

In the present embodiment, for the installation of the water pipe mechanism 4 and the handle housing 1, two embodiments are provided on the premise that the pipe core 41 is inserted into and in communication with the mounting branch pipe 24 or the valve seat 21, Hereinafter, a detailed description will be made on the premise that the pipe core 41 is inserted into and in communication with the mounting branch pipe 24 with reference to the accompanying drawings.

First Embodiment: Referring to FIG. 19 in conjunction with FIG. 16, the pipe core 41 is rotatably mounted in the handle housing 1 by a clamping assembly.

Specifically, the clamping assembly comprises a first clamping port 4311, a second clamping port 4321 and a first annular rotating slot 434; wherein the first clamping port 4311 is provided on the inner wall of the first shell 11, and the second clamping port 4321 is provided on the inner wall of the second shell 12 and enclose with the first clamping port 4311 to form a constraining hole. The first annular rotating slot 434 is arranged around the pipe core 41, is clamped in the constraining hole, and rotates along the self-axis of the pipe core 41. The constraining hole is formed after the first shell 11 and the second shell 12 are combined. Specifically, the inner wall of the first shell 11 is provided with a first clamping plate 431, and the first clamping port 4311 is implemented as a first notch on the first clamping plate 431; the inner wall of the second shell 12 is provided with a second clamping plate 432, and the second clamping port 4321 is implemented as a second notch on the second clamping plate 432. Furthermore, the first notch and the second notch are semicircular notches. More preferably, the first notch and the second notch are combined to form a constraining hole, and the size of the inner diameter of the limiting slot matches with the outer diameter of the first annular rotating slot 434, so that the first annular rotating slot 434 is tightly clamped by the first notch and the second notch.

As described above, the top of the pipe core 41 is inserted into the valve seat 21, the first annular rotating slot 434 is provided at an opposing bottom position, and the constraining hole is provided to limit movement in the insertion direction. The depth at which the pipe core 41 is inserted into the mounting branch pipe 24 affects the relative positions of the first annular rotating slot 434 and the constraining hole. A preferred implementation provided by the present embodiment to address this issue is that the outer wall of the pipe core 41 is further provided with a constraining annular rebar 433, which is restricted by the insertion opening of the mounting branch pipe 24 and abuts against the insertion opening. When the pipe core 41 is inserted into the mounting branch pipe 24 until the constraining annular rebar 433 abuts against the insertion opening at the bottom end of the mounting branch pipe 24, the position of the first annular rotating slot 434 is aligned with the position of the constraining hole.

Further, the first annular rotating slot 434 is implemented as a clamping slot between two first annular rebars 435. Specifically, two first annular rebars 435 are arranged at intervals on the outer wall of the pipe core 41, and the first annular rotating slot 434 is formed between the two first annular rebars 435, and the two first annular rebar 435 can be better clamped at the constraining hole in the depth direction.

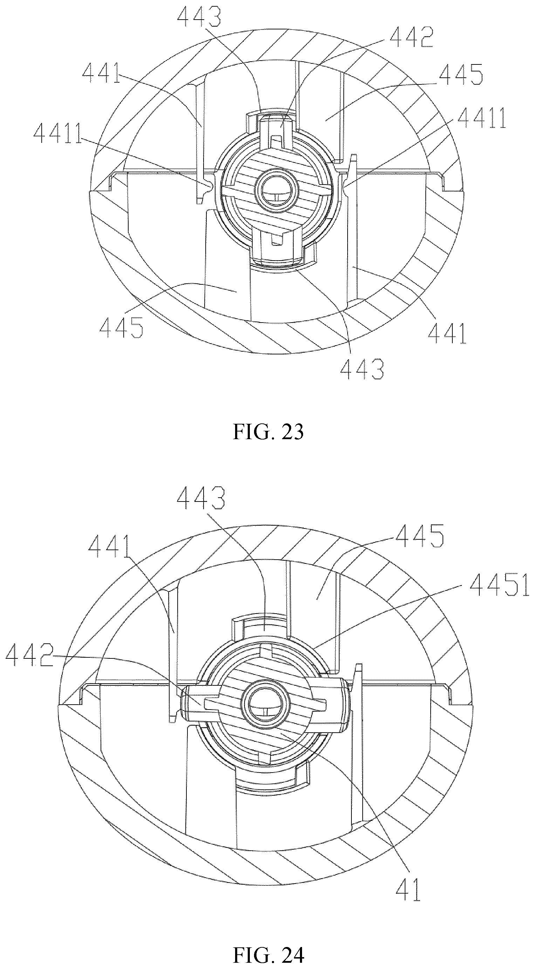

Second Embodiment: please refer to FIGS. 20-24, the pipe core 41 is detachably inserted into the handle housing 1 by the constraining assembly.

Specifically, the constraining assembly comprises a cantilever 441 and a constraining projection 442. The cantilever 441 is provided in the handle housing 1 and is provided with a constraining tab 4411; the constraining projection 442 is provided on the outer wall of the pipe core 41 and is provided with a constraining slot 4421 matched with the constraining tab 4411. The constraining slot 4421 rotates when the pipe core 41 is inserted into the handle housing 1, and is clamped with the constraining tab 4411.

As for the installation relationship of the constraining tab 4411 and the constraining slot 4421 with respect to the handle housing 1 and the pipe core 41, the present embodiment has two implementations. The constraining tab 4411 and the constraining slot 4421 can be cross-installed with the handle housing 1 and the pipe core 41.

The outer wall of the pipe core 41 is provided with a constraining projection 442, and the inner wall of the handle housing 1 is provided with a cantilever 441. The constraining projection 442 and the cantilever 441 are structural carriers of the constraining slot 4421 and the constraining tab 4411. Specifically:
One. The constraining slot 4421 is provided on the constraining projection 442, and the constraining tab 4411 is provided on the cantilever 441;
Two. The constraining tab 4411 is provided on the constraining projection 442, and the constraining slot 4421 is provided on the cantilever 441.

The present embodiment is described in detail in the first implementation with reference to the drawings.

The pipe core 41 has a corresponding insertion relationship with the handle housing 1, which is convenient for the insertion of the pipe core 4121 into the mounting branch pipe 24 inside handle housing 1, and is also for the purpose of allowing the constraining projection 442 to be inserted into a specified position to facilitate the sticking of the constraining tab 4411 on the cantilever 441. As a preferable implementation of the present embodiment, please refer to FIGS. 20, 23 and 24, the handle housing 1 is provided with a guiding slot 443 therein for guiding the insertion of the constraining projection 442, and the guiding slot 443 is located on one side of the cantilever 441. When the constraining slot 4421 and the constraining tab 4411 of the constraining assembly are stuck with each other, the guiding end of the guiding slot 443 is lower in height than the constraining assembly, which facilitates rotation of the constraining projection 442 and facilitates that the constraining tab 4411 is not constrained to rotate when it is stuck and has been disengaged from the guiding slot 443.

Further, as a preferable implementation of the present embodiment, the number of the constraining projections 442 is two, and the two constraining projections 442 are positioned on opposite side walls of the pipe core 41. Correspondingly, the number of the cantilevers 441 is two, the two cantilevers 441 are disposed on the inner wall of the handle housing 1, and the positions of the two cantilevers 441 respectively correspond to the two constraining projections 442. Preferably, in the present embodiment, the handle housing 1 is formed by a first shell 11 and a second shell 12 which are clamped in an assembling manner and then fixed, and the two cantilevers 441 are correspondingly provided on the first shell 11 and the second shell 12.

The cantilever 441 is made of plastic and may deform slightly when pressed by the constraining projection 442, such that the constraining projection 442 is stuck by the constraining tab 4411 on the cantilever 441 and cannot rotate back naturally, but requires the user to rotate the pipe core 41 by external force to move back.

After the pipe core 41 is inserted into the mounting branch pipe 24 and rotated to stick with the cantilever 441, due to the sticking of the constraining tab 4411 with the constraining slot 4421, the pipe core 41 and the handle housing 1 restrict rotation in the self-axis direction and restrict rotation in the depth direction. In order to improve the limitation in the depth direction, as a preferred implementation of the present embodiment, a constraining plate 444 for restricting the constraining projection 442 from being pulled out along with the pipe core 41 is provided at least below the cantilever 441 in the handle housing 1, and further prevents the pipe core 41 from being pulled out in this state. The constraining plate 444 and the guiding slot 443 do not collide with each other in position, and after being rotated to move back, the pipe core 41 is free of the constraints of the constraining plate 444 in the depth-in direction and may be pulled out.

When the number of the constraining projection 442 and the cantilever 441 is two, the position of the constraining plate 444 is suitably set on the first shell 11 and the second shell 12, and of course, the constraining plate 444 is not necessarily implemented as a plate. The constraining plate 444 is intended to assist the pipe core 41 in not being pulled out in the depth direction during assembling. Other functional elements that can achieve the effect should be included, regardless of which shape is implemented.

Please refer to FIGS. 20-24, after the pipe core 41 and the cantilever 441 are clamped, in order to prevent excessive force from causing the clamping to be offside and fall off, the handle housing 1 is also provided with a stopper 445 close to the constraining assembly to prevent the constraining tab 4411 from being excessively matched with the constraining slot 4421 to be separated. The stopper 445 has a fitting curved surface 4451 fitted to the outer wall of the pipe core 41. Preferably, when the number of the constraining projection 442 and the cantilever 441 is two, the stoppers 445 have a corresponding number and are provided in the first shell 11 and the second shell 12, respectively. The fitting curved surface 4451 is attached to the outer wall of the pipe core 41 to stabilize the pipe core 41.

The above technical solutions, either individually or in combination, exhibit the following beneficial effects:
The blocking seal body 231 blocks the passage between the water intaking chamber 211 and the control chamber 212 by means of the first elastic restoring member 232, which can completely cut off and block the waterflow. During use, the control valve spool 22 is actuated to apply force to the blocking seal body 231, so as to jack up the blocking seal body 231 and open the passage, thereby achieving communication between the two chambers, and subsequently achieving communication between the nozzle mechanism 31 and the water pipe mechanism 4 which are in respective communication with the two chambers, so as to perform oral cleansing. The structure is simple and is convenient to operate, and may block waterflow without water leakage.

In the blocked state, even if there is a liquid level difference between the oral irrigator main body and the water intaking chamber 211 of the handle, the pressure exerted by the liquid in the water intaking chamber 211 on the blocking seal body 231 may better seal the communication channel, thereby creating a positive effect. Therefore, there is no risk of leakage or dripping after the handle is below the water level of the main body for a long period of time;
The force-applying part 2211 of the valve spool body 221 is a curved surface with a gradient circumferential radius, and when the valve spool body 221 is rotated, the curved surface close to the force-bearing part 2311 gradually increases in its circumferential radius and gradually presses on the blocking seal body 231, such that the blocking seal body 231 opens the communication passage. This process is smooth and convenient.

A positioning slot 2212 is provided where the curved surface presses against the force-bearing part 2311 to open the communication passage, such that the force-bearing part 2311 may be held in the positioning slot 2212 through elastic support of the first elastic restoring member 232. By keeping the opened state of the communication passage, it is possible to facilitate the continuous flow of waterflow, which in turn makes it convenient for the user to continuously perform oral cleansing operations.

The control assembly 222 achieves pure mechanical transmission through direct meshing of the toothed segments, eliminating the need for electrified structural settings on the handle, and facilitating cost-effectiveness and an intuitive and effective control;
The water pipe mechanism 4 is installed by means of the clamping assembly, and may rotate relative to the handle housing 1, facilitating the adjustment of the direction of the nozzle 31 on the handle for ease of use by the user;
the water pipe mechanism 4 is installed by means of the constraining assembly. During assembly, the pipe core 41 of the water pipe mechanism 4 is inserted and rotated, accompanied by an audible "click" feedback sound, indicating that the pipe core 41 is clamped to the handle housing 1 by means of the constraining assembly; during disassembly, it may be simply retracted and pulled out in the opposite direction, which is convenient and fast.

The person skilled in the art should understand that the embodiments of the present disclosure described above are provided as examples and do not limit the present disclosure. The purpose of the present disclosure has been fully and effectively achieved. The functions and structural principles of the present disclosure have been shown and explained in the embodiments, and the implementation of the present disclosure can be modified or altered in any way without departing from the principles stated.

## Claims

1. An assembled oral irrigator handle with a waterflow switch, **characterized by** comprising:
a handle housing (1), having a mounting chamber formed therein, a top mounting port (13) formed at the top thereof, and a bottom mounting port (14) formed at the bottom thereof;
a waterflow switch control mechanism (2), being assembled in the mounting chamber and at least comprising:
a valve seat (21), comprising at least a water intaking chamber (211) and a control chamber (212), the water intaking chamber (211) being in communication with the control chamber (212) through a communication passage, and the control chamber (212) comprising a valve spool mounting port (2121);
a control valve spool (22), being provided in the control chamber (212) via the valve spool mounting port (2121) and comprising a force-applying part (2211), the force-applying part (2211) being under control of the control valve spool (22) to apply force towards the water intaking chamber (211);
a blocking seal (23), comprising a blocking seal body (231) and a first elastic restoring member (232), the blocking seal body (231) being provided in the water intaking chamber (211), restorably blocking the communication passage by means of the first elastic restoring member (232), comprising a force-bearing part (2311) that bears force from the force-applying part (2211) through the communication passage, and being moved after being subjected to force from the force-applying part (2211) through the force-bearing part (2311) to open the communication passage;
a nozzle mechanism (3), comprising at least a nozzle (31), a rod body (311) of which penetrating the top mounting port (13) and being in communication with the control chamber (212);
a water pipe mechanism, being assembled in the mounting chamber and being in communication with the water intaking chamber (211) through the bottom mounting port (14).

2. The assembled oral irrigator handle according to claim 1 with a waterflow switch, **characterized in that** the nozzle mechanism (3) further comprises a locking assembly (32), which comprises a lock part and a second elastic restoring member (322), and
wherein the lock part is assembled in the mounting chamber by means of the second elastic restoring member (322), is restorably locked onto the rod body (311) of the nozzle (31), and comprises a pressing part (323), which extends outside the handle housing (1) for pressing to unlock; the rod body (311) of the nozzle (31) comprises a locking slot matching with the lock part.

3. The assembled oral irrigator handle according to claim 1 or 2 with a waterflow switch, **characterized in that** the lock part comprises a lock part body (3211) and a locking side rib (3212), the lock part body (3211) has a first lock part perforation (32111) for the rod body (311) to penetrate, and the locking side rib (3212) is provided on an inner wall of the first lock part perforation (32111) and corresponds to the locking slot.

4. The assembled oral irrigator handle according to any one of claims 1 to 3 with a waterflow switch, **characterized in that** the control valve spool (22) comprises:
a valve spool body comprising a curved surface with a gradient circumferential radius, the force-applying part (2211) being implemented as the curved surface; and
a control assembly (222) comprising a first arc-shaped toothed segment (2221) and a first straight toothed segment (2222), the first arc-shaped toothed segment (2221) being provided on the valve spool body and located outside the mounting port, the first straight toothed segment (2222) being meshed with the first arc-shaped toothed segment (2221) to drive the valve spool body to rotate inside the control chamber (212), and the curved surface gradually applying force to the force-bearing part (2311) due to rotation of the valve spool body.

5. The assembled oral irrigator handle according to any one of claims 1 to 4 with a waterflow switch, **characterized in that** the curved surface is provided with a positioning slot (2212) for holding the force-bearing part (2311), and when the force-bearing part (2311) is held in the positioning slot (2212), the blocking seal body (231) keeps a state of opening the communicating passage.

6. The assembled oral irrigator handle according to any one of claims 1 to 5 with a waterflow switch, **characterized in that** the force-bearing part (2311) is implemented as a force-bearing rod body, which penetrates the communicating passage and is subjected to force from the force-applying part (2211) to drive the blocking seal body (231) to open the communicating passage.

7. The assembled oral irrigator handle according to any one of claims 1 to 6 with a waterflow switch, **characterized in that** the communicating passage comprises a perforation (2141) and several communication holes (2142); the force-bearing rod body is inserted into the perforation (2141) and is subjected to force from the force-applying part (2211); the communication holes (2142) are in communication with the control chamber (212) and the water intaking chamber (211), and are restorably blocked by the blocking seal body (231) by means of the first elastic restoring member (232).

8. The assembled oral irrigator handle according to any one of claims 1 to 7 with a waterflow switch, **characterized in that** the blocking seal body (231) is provided with a first blocking seal ring (2312) near the communication hole (2142), and the first blocking seal ring (2312) restorably seals the communication holes (2142) along with the blocking seal body (231) by means of the first elastic restoring member (232).

9. The assembled oral irrigator handle according to any one of claims 1 to 8 with a waterflow switch, **characterized in that** a top of the blocking seal body (231) is capable of blocking the perforation (2141), and/or, the force-bearing rod body and the perforation (2141) form a contact seal therebetween.

10. The assembled oral irrigator handle according to any one of claims 1 to 9 with a waterflow switch, **characterized in that** the rod body (311) of the nozzle (31) is in communication with the valve seat (21) through an elastic seal (33), the elastic seal (33) is provided in the valve seat (21), the rod body is inserted into the valve seat (21) and locked by the lock part, and the elastic seal (33) applies a rebound force to the rod body when the rod body is ejected after being unlocked.

11. The assembled oral irrigator handle according to any one of claims 1 to 10 with a waterflow switch, **characterized in that** the waterflow switch control mechanism (2) further comprises a mounting branch pipe (24), which is provided with a mounting bracket (241) therein, one end of the mounting branch pipe (24) is in communication with a water intaking chamber (211) body, the other end of the mounting branch pipe (24) is for communication with the water pipe mechanism; the first elastic restoring member (232) is a spring and is installed between the mounting bracket (241) and the blocking seal body (231).

12. The assembled oral irrigator handle according to any one of claims 1 to 11 with a waterflow switch, **characterized in that** the water pipe mechanism at least comprises a pipe core and a water pipe; the pipe core is provided with a liquid flow channel therein and is provided at two ends of the pipe core with a pipe core inlet and a pipe core outlet which are in communication with the liquid flow channel, the water pipe is connected to the pipe core inlet, and the pipe core outlet is inserted into the mounting branch pipe (24).

13. The assembled oral irrigator handle according to any one of claims 1 to 12 with a waterflow switch, **characterized in that** the handle housing (1) is integrally formed; or, the handle housing (1) comprises a first shell (11) and a second shell (12), and the first shell (11) and the second shell (12) are clamped together to form the handle housing (1).

14. The assembled oral irrigator handle according to any one of claims 1 to 13 with a waterflow switch, **characterized in that** the pipe core is rotatably installed in the handle housing (1) by means of a clamping assembly; the clamping assembly comprises:
a first clamping port (4311), the first clamping port (4311) being provided on an inner wall of the first shell (11);
a second clamping port (4321), the second clamping port (4321) being provided on an inner wall of the second shell (12) and cooperating with the first clamping port (4311) to enclose a constraining hole; and
a first annular rotating slot (434), the first annular rotating slot (434) being arranged around the pipe core, being clamped in the constraining hole, and rotating along a self-axis of the pipe core.

15. The assembled oral irrigator handle according to any one of claims 1 to 14 with a waterflow switch, **characterized in that** the pipe core is detachably inserted into the handle housing (1) by the constraining assembly; the constraining assembly comprises:
a cantilever (441), the cantilever (441) being provided in the handle housing (1) and provided with a constraining tab (4411); and
a constraining projection (442), the constraining projection being provided on an outer wall of the pipe core (41) and provided with a constraining slot (4421) matched with the constraining tab, and the constraining slot (4421) rotating to clamp with the constraining tab the when the pipe core (41) is inserted into the handle housing (1).
